# EUROPEAN PATENT APPLICATION

(11) **EP 2 461 270 A1**
(43) Date of publication of application: **06.06.2012**
(21) Application number: 10193817.3
(22) Date of filing: 06.12.2010
(51) Int. Cl.: G06K 9/00

(54) **Method, apparatus and computer program product for predicting the behaviour of entities**

(71) Applicant: Siemens Aktiengesellschaft, 80333 München (DE)
(72) Inventor: Klein, Wolfram, 85579, Neubiberg (DE)

(57) **Abstract**

The present invention discloses a method, apparatus and computer program product for predicting the behaviour of entities, comprising identifying a plurality of parameters for the behaviour of a plurality of entities, narrowing the plurality of entities to a plurality of entities of interest based on a scenario, predicting the behaviour of the entities of interest within the elected scenarios, and calibrating the predicted behaviour of entities to an observed behaviour for the entities of interest, wherein the entities of interest are persons with luggage.

## Description

### FIELD OF THE INVENTION

The present invention is directed to a method, apparatus and computer program product for predicting the behaviour of entities. The present invention is furthermore directed to a computer program being adapted to perform the method of the invention and a data carrier which stores such a computer program.

### BACKGROUND OF THE INVENTION

Simulators of pedestrian streams imitate the behaviour of crowds in different infrastructures and places, such as buildings, stadiums, etc., for instance for statistical purpose, for administrative purposes and furthermore for safety reasons of pedestrians and traffic participants. One goal of pedestrian stream simulation is to gain improved control over crowd behaviour and especially to predict crows behaviour. Off-line simulations allow re-enacting several scenarios and critical situations and hence finding adequate measures for avoiding dangers and thus improving security.

A variety of potentially dangerous scenarios are known. These scenarios range from environmental disasters to cultural events. In case of emergency it is required to evacuate people as fast as possible. In order to deliver reliable results crowd simulations must correctly reproduce crowd behaviour. Hence, a crowd simulation model must capture important parameters of crowd behaviour. Commonly known methods for crowd simulation apply gradually increasing details of modelling, and compare the simulation results and the empirical data. The underlying rules of interaction can be assumed to be general to a certain degree depending on a large number of parameters. Rather general rules of interaction cannot be expected to capture every situation and need to be adapted to the scenario of interest . Hence, the model of pedestrian streams must be calibrated and adjusted. Calibration of a specific real world system refers to the adaptation of the model parameters of pedestrian streams through specific information. Commonly known dependencies taken into account at calibration are for example the basic environmental conditions, any structural constraints imposed by the architecture of a surrounding building, as well as socio-cultural aspects.

In the currently known methods fundamental diagrams are used for predicting behaviour of pedestrian streams . One may for instance apply an empirically derived fundamental diagram of pedestrian dynamics. Such a diagram of pedestrian dynamics may for instance indicate that there is a relationship between the density of pedestrians and their walking speed. Also a scenario dependency can be indicated, such as that the walking speed in one direction depends on the density of pedestrians moving in the opposite direction.

Commonly known methods do not introduce a fundamental diagram allowing predictions regarding all possible scenarios, cultures and locations. It is known to model pedestrian behaviour as a function of pedestrian behaviour parameters.

Commonly known methods perform pedestrian stream simulation and calibration thereof for known data from databases or other sources in an off-line way. Off-line refers to non-real-time calibrations of pedestrian stream simulation devices. Commonly known methods are complex and resource intense, which results in long time duration for the calibration of a motion simulation device.

The reasons related to simulation of persons streams are dependent on the event itself, such as gathering virtual experience regarding people's behaviour, either for event planning or design reasons. In order for the simulated results to meet the reality conditions, the simulated results should be as close as possible to the reality. Said correspondence should apply to people's velocity, the behaviour in between persons, their walking destination in dependence to time and source, etc.

While analyzing the behaviour of people in a main station or airport, it is evident that many people are carrying different kinds of baggage for travelling. The baggage drastically influences their walking speed and also their flexibility of movement.

Therefore, what is needed is to provide a simulation tool that is able to simulate the behaviour of persons with luggage. What is therefore required is a method for predicting the behaviour of a plurality of entities, wherein the entities may comprise persons with luggage.

### SHORT SUMMARY OF THE INVENTION

It is therefore an object of the present invention to provide a method, apparatus, and computer program product for predicting the behaviour of a plurality of entities, and as such allowing predictions of motion behaviours in real-time. This above referenced objective technical problem is solved by a method providing the features of patent claim 1, an apparatus provided by claim 14, and a computer program product of claim 15.

In accordance with a first aspect of the present invention, a method for predicting the behaviour of entities is proposed, comprising: identifying a plurality of parameters for the behaviour of a plurality of entities, narrowing the plurality of entities to a plurality of entities of interest based on a scenario, predicting the behaviour of the entities of interest within the elected scenario, and calibrating the predicted behaviour of entities to an observed behaviour for the entities of interest.

In accordance with a further aspect of the present invention a system for predicting the behaviour of entities is proposed, comprising at least a data bus system, a memory coupled to the data bus system, wherein the memory includes computer usable program code, a processing unit coupled to the data bus system, wherein the processing unit executes the computer usable program code to identify a plurality of parameters for the behaviour of a plurality of entities, narrow the plurality of entities to a plurality of entities of interest based on a scenario, predict the behaviour of the entities of interest within the elected scenario, and calibrate the predicted behaviour of entities to an observed behaviour for the entities of interest.

In accordance with a further aspect of the present invention is proposed a computer program product for predicting the behaviour of entities, comprising a tangible computer usable medium including computer usable program code for performing prediction regarding the behaviour of entities, the computer usable program code being used for identifying a plurality of parameters for the behaviour of a plurality of entities, narrowing the plurality of entities to a plurality of entities of interest based on a scenario, predicting the behaviour of the entities of interest within the elected scenario, and calibrating the predicted behaviour of entities to an observed behaviour for the entities of interest.

Other characteristics and advantages of the present invention will be apparent in connection with the dependent claims.

In accordance with the present invention, the method of the invention is further characterised by the plurality of parameters comprising at least one of a size of a person and luggage, a person's weight, a person's velocity, a person's age, a person's fitness level, and a type of luggage. The plurality of entities comprises at least one of persons with luggage, persons with children, person with pets, cars, trucks, airport luggage trailers, and rescuers with rescue equipment. The identification is carried out via at least one of observation, visualisation, download of statistical data, and video analytic.

In accordance with the present invention, the method of the invention is further characterised by the scenario being indicative of temporal, spatial, or other constrains. An exemplary scenario might be a normal, crowded or emergency scenario, e.g. at least one of a holiday, a Monday afternoon, a weekend situation. Should a density function be used to characterise the scenario, by a normal scenario is understood 1 to 3 persons per square meter, by a crowded scenario is understood a density of more than 3 persons per square meter, and by an emergency scenario is understood a situation when the density function and the velocity of movement of entities increases exponentially in a short amount of time. Another exemplary scenario is at least one of an airport, a train station, an underground station or bus stop. The behaviour is indicative of at least one of walking direction, congregation of crowds, velocity of movement in a free area, velocity of movement in a crowded area, and the geometrical size or the form of the area of movement.

In accordance with the present invention, the method of the invention is further yet characterised by the prediction being a short term validity prediction, that relies on a combination of statistical data. The prediction comprises an extrapolation of data based on past behaviour. The extrapolation assumes that the entities of interest will behave in the future in the same manner as in the past in combination with a geometrical topology.

In accordance with the present invention, the method of the invention is further yet characterised by the calibration taking into account at least one of basic environmental conditions, structural constraints imposed by the architecture of a surrounding building, and as socio-cultural aspects.

Other characteristics and advantages of the present invention will be apparent in connection with the following description.

### BRIEF DESCRIPTION OF THE DRAWINGS

For a more complete understanding of the present invention, the objects and advantages thereof, reference is now made to the following descriptions taken in conjunction with the accompanying drawings, in which:
Fig. 1 illustrates a cellular automaton based on a grid with hexagonal cells;
Fig. 2 is a flow chart representation of the method for predicting the behaviour of entities, in accordance with an embodiment of the present invention.
Fig. 3 is the illustration of an embodiment of a data processing system in which a method for predicting the behaviour of entities in accordance with an embodiment of the present invention, may be implemented.

Non-limiting and non-exhaustive embodiments of the present invention are described with reference to the above referenced figures, wherein like reference numerals refer to like parts throughout the various views unless otherwise specified. The order of description should not be construed as to imply that these operations are necessarily order-dependent.

### DETAILED DESCRIPTION OF THE INVENTION

State of the art person simulations are modelling persons with different velocities, weight or ages but assume that the persons have always the same geometrical form. No provisions and distinctions are made for people carrying luggage. The methods known from the art assume no differences between the volume of persons, and said differences are neglected by assuming an average size for each person. Method known to rely on cellular automaton are assuming that a person always has the same volume, and is moving without luggage.

While attempting to simulate the group behaviour of people, in groups comprising 2, 3, 4 or more persons, it has been observed that the persons in one group stay together in a more or less flexible way, influenced at least by their environment. As such the group of persons may continue to stay together and the group may move in a line or in rectangular shape or if the distance between the group of members or between the group and one specific member becomes too large, the attractive forces between the group members are enlarged in order to bring the group members together again.

For the prediction of the behaviour of one entity a cellular automation model may be employed.

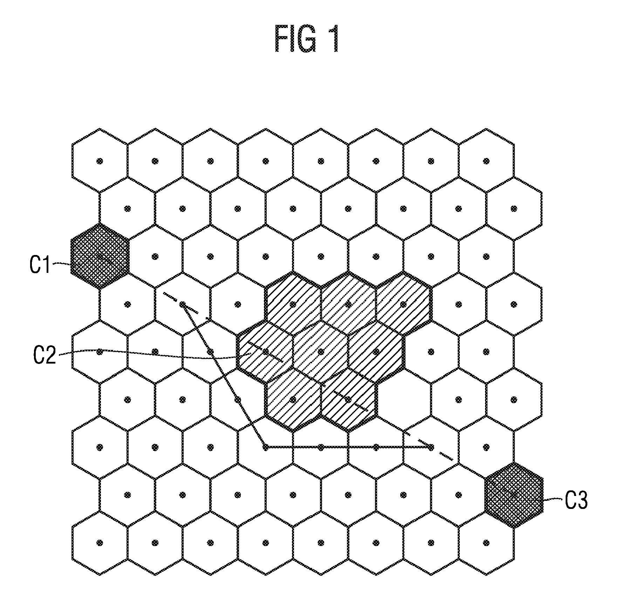

Figure 1 shows a cellular automaton based on a grid with hexagonal cells as being used by the method for predicting the behaviour of entities, according to an aspect of the present invention. According two an embodiment of the present invention pedestrian or entity motion can be simulated using a discretization of the simulation area by means of cells, which are hexagonal in the present embodiment. Said cells may in other embodiments be triangular or rectangular, among ethers. At every time step of the simulation procedure of an entity motion, a cell, has a state being defined by the number of pedestrians or entities being located on this cell. Pedestrians or entities move from one cell to another thus changing the state of each of the cells .

In the example shown in figure 1 an entity is located at cell C1 and desires to move forward to cell C3. The entity being located in cell C1 may proceed directly to cell C3, which is indicated in the present figure 1 by a dashed line. As the entity being located in C1 encounters an obstacle, for instance in cell C2, it may not be possible to move directly from the location C1 to the cell C3. In this example it may be required to move around the obstacle, for instance in cell C2, which is indicated by a line in the present figure 1. The cell model as demonstrated in figure 1 may be a part of a motion simulation model. Different velocities of entities can be implemented by allowing the entity to proceed over several cells per simulation step. Hence, in the present embodiment velocity can also be referred to as cell speed indicated by the number of cells covered per simulation step.

In the shown example the entity moving from cell C1 to a cell C3 is a pedestrian. Cell C1 represents an elevator transporting pedestrians from a subway station to the surface. Cell C1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviation that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C1 several pedestrians are located. It may further be possible, to define a threshold of the allowable number of pedestrians per cell, which indicates, that the specific cell is occupied and therefore represents an obstacle for further pedestrians. The cell model illustrated in figure 1 may be a part of the motion simulation model, while the modelling of pedestrian or entity motion behaviour is by no means restricted to the cell model. The person skilled in the art therefore appreciates further implementations of a motion simulation model, such as an ontology, a set of rules, a formal model and/or a semi-formal model.

As described above, cellular automation models are based on simulations based on a numerical grid. Often as shown in figure 1 a hexagon or rectangular grid of a certain size is used in order to model the behaviour of people with an average geometrical diameter, shape and size.

The same models may be used for predicting the behaviour of other entities, such as persons with luggage. People with luggage may be differentiated as people with small luggage and people with large luggage. For people with small luggage the following assumptions are made: people with luggage are approximated via a fixed group of two or three persons moving with the same velocity and having the same behaviour. Specifically for people carrying small luggage, they can be approximated in accordance with the present invention via two neighbouring persons, a fixed group of two persons with high attractive forces in between. In all situations both persons must stay together. As a "first" person is defined the person carrying the luggage itself and as the "second" person is defined the carried luggage. An order of the "first" versus the "second" person is not of interest and may vary without impacting the prediction regarding the behaviour of entities. Further, no significant differences are observed between the behaviour of the "first" and "second" persons. The person carrying the small luggage approximated via the first and second persons moves with a velocity that is the same for both the "first" and the "second" persons. Further, there is no difference in behaviour of the "first" and "second" persons or "person" and "baggage". The velocity of the two persons can be reduced by a certain parameter in order to meet the real velocity of persons with small luggage. This parameter is calibrated to real data. The geometrical form of the group is defined two be a line in walking direction.

For people with larger luggage a three persons approximation can be used instead of the two persons approximation. Even people carrying extremely large luggage can be approximated as a group of persons, by an extension of the group size and using the same approach as for persons with small or one large luggage. Depending on the size of the luggage a corresponding group of persons can be defined, wherein the member of persons in the group increases with the size of the luggage.

The approximations described above permit a more realistic persons behaviour at airports and main stations. They further permit better simulation results for scenarios depending on persons carrying luggage, especially with respect to waking times, bottle necks and length of queues.

Therefore, a method for predicting the behaviour of entities, who's movement may be approximated via a model such as the cellular automaton model, comprises at least a first step consisting of identifying a plurality of parameters for the behaviour of a plurality of entities.

As discussed above, it is of interest to learn about the behaviours of persons with luggage. Other categories of entities whose behaviour may be as well described via the method of the present invention are persons with children, person with pets, cars, trucks, airport luggage trailers, and rescuers with rescue equipment, among others. By a "plurality of parameters" in the present invention is understood among others wether or not the persons whose behaviour is attempted to be described have or do not have luggage. Other parameters of interest comprise among others a person's weight, a person's velocity, a person's age, a person's fitness level, and the type of luggage they are carrying.

The identification of parameters is carried out via at least one of observation, visualisation, download of statistical data, video analytics or information provided by other sensors, such as audio, infrared camera, intelligent floor plates.

The method for predicting the behaviour of entities, whose movement may be approximated via a model such as the cellular automaton model, comprises as well a second step of narrowing the plurality of entities to a plurality of entities of interest based on a scenario.

The referred to scenario is indicative of temporal, spatial, or other constrains. An example of such scenario indicative of a temporal constraint is a holiday, a Monday afternoon, an emergency situation. On a holiday a larger number of persons carrying luggage tends to be observed versus Monday afternoon when most passengers are business passengers travelling without or with small luggage. In an emergency situation most luggage tends to be abandoned, so passengers will be carrying no luggage. Another example refers to at least one of an airport, a train station, an underground station, bus stop, a sports stadium, a highway, etc.

The method for predicting the behaviour of entities, whose movement may be approximated via a model such as the cellular automaton model, comprises as well a third step of predicting the behaviour of the entities of interest within the elected scenario.

The behaviour is indicative of at least one of walking direction, congregation of crowds, velocity of movement in a free area, velocity of movement in a crowded area, and the geometrical size or the form of the area of movement.

The prediction is a short term validity prediction regarding e.g. 3 to 5 minutes in the future. The prediction relies on a combination of statistical data and may comprise an extrapolation of data based on past behaviour. The extrapolation assumes that the entities of interest will behave in the future in the same manner as in the past in combination with a geometrical topology.

Pedestrian stream simulations imitate the flow of a crowd at a certain place at a certain time. Input parameters regarding the "where", the "when" and the "who" are required. Parameters concerning the place, the "where"', once topology and area of observation is chosen, the topology of the infrastructure is static in the frame of time and do not need on-line adjustment.

The time of day of the simulation can be considered, because it has an effect on the number of people present, the choice where people go and how they walk.

Simulation models for pedestrian streams represent these aspects by several input values, such as:
the number of persons in the simulation area and their distribution and hence the crowd density in the simulation area. This data can be extracted on-line from video data. Restrictions are coverage and measurements errors. That is, cameras may not be installed at every spot so that full area of interest is not totally covered and the measurements usually are subject to error. The number of persons and distribution and hence the crowd density can be read into the simulation. In case of incomplete data, the data must be extrapolated.

The assignment of targets or attraction points to which people walk to and identification of sources where people come from depends on the topology and must be defined. From video data, where people are traced, a distribution of the goals and sources can be extracted. Radio technologies may also be used. One can assign targets and sources in the simulations stochastically. That is, in an area of measurement a simulated person is assigned to a certain goal with a probability that corresponds to the statistical distribution extracted from the measurement . A source e.g. entrance, "produces" new persons at rate as observed.

The human behaviour parameters that vary with the type of crowd, such as nationality, culture, gender distribution, age distribution and also the time of day, such as level of fitness, exhaustion or even the weather. All these differences ultimately show their effect in the way people walk - as individuals in an open space and as members in a crowd. There is an aggregated model that is considered to be suitable to capture most - or at least many of the relevant - behavioural parameters in a very simple concept: The dependency of the walking speed on the density. Or, equivalently, the dependency of the flow on the density. This dependency is expressed in the so-called fundamental diagrams. One can calibrate the human behaviour by adjusting the walking speed to the fundamental diagram.

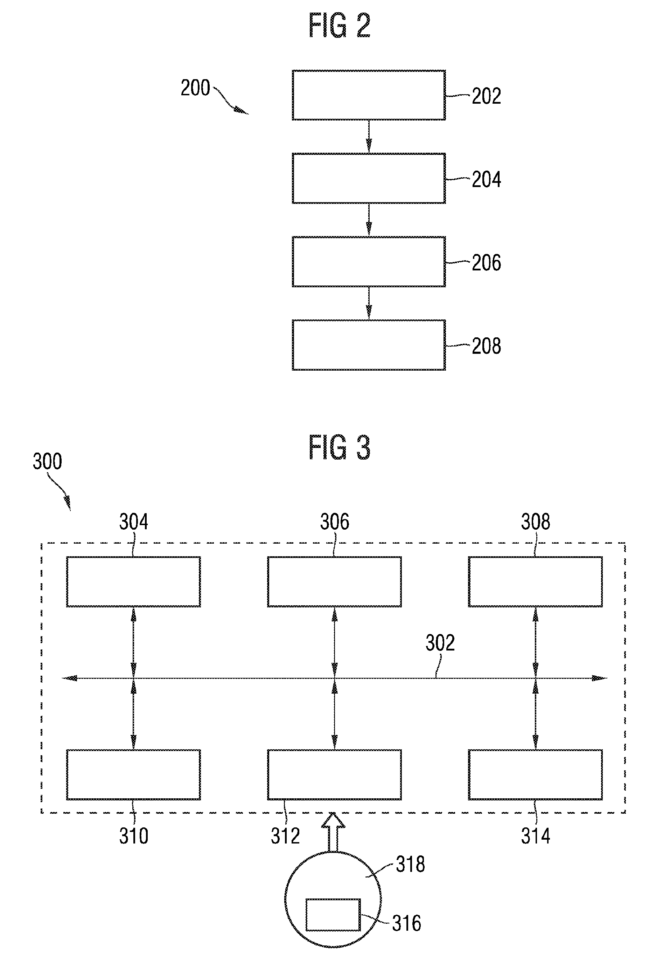

Fig. 2 is a flow chart representation of the method for predicting the behaviour of entities, in accordance with an embodiment of the present invention.

In accordance with the flow chart representation of figure 2, a method 200 for predicting the behaviour of entities comprises identifying 202 a plurality of parameters for the behaviour of a plurality of entities, narrowing 204 the plurality of entities to a plurality of entities of interest based on a scenario, predicting 206 the behaviour of the entities of interest within the elected scenario, and calibrating 208 the predicted behaviour of entities to an observed behaviour for the entities of interest.

Turning now to the illustration of figure 3, figure 3 is an embodiment of a data processing system in which a method for predicting the behaviour of entities may be implemented.

FIG. 3 is an embodiment of a data processing system 300 in which an embodiment of a method of predicting the behaviour of entities application may be implemented. The data processing system 300 of FIG. 3 may be located and/or otherwise operate at any node of a computer network, that may exemplarily comprise clients, servers, etc., not illustrated in the figure. In the embodiment illustrated in FIG. 3, data processing system 300 includes communications fabric 302, which provides communications between processor unit 304, memory 306, persistent storage 308, communications unit 310, input/output (I/O) unit 312, and display 314.

Processor unit 304 serves to execute instructions for software that may be loaded into memory 306. Processor unit 304 may be a set of one or more processors or may be a multi-processor core, depending on the particular implementation. Further, processor unit 304 may be implemented using one or more heterogeneous processor systems in which a main processor is present with secondary processors on a single chip. As another illustrative example, the processor unit 304 may be a symmetric multi-processor system containing multiple processors of the same type.

In some embodiments, the memory 306 shown in FIG. 3 may be a random access memory or any other suitable volatile or nonvolatile storage device. The persistent storage 308 may take various forms depending on the particular implementation. For example, the persistent storage 308 may contain one or more components or devices. The persistent storage 308 may be a hard drive, a flash memory, a rewritable optical disk, a rewritable magnetic tape, or some combination of the above. The media used by the persistent storage 308 also may be removable such as, but not limited to, a removable hard drive.

The communications unit 310 shown in FIG. 3 provides for communications with other data processing systems or devices. In these examples, communications unit 310 is a network interface card. Modems, cable modem and Ethernet cards are just a few of the currently available types of network interface adapters. Communications unit 310 may provide communications through the use of either or both physical and wireless communications links.

The input/output unit 312 shown in FIG. 3 enables input and output of data with other devices that may be connected to data processing system 300. In some embodiments, input/output unit 312 may provide a connection for user input through a keyboard and mouse. Further, input/output unit 312 may send output to a printer. Display 314 provides a mechanism to display information to a user.

Instructions for the operating system and applications or programs are located on the persistent storage 308. These instructions may be loaded into the memory 306 for execution by processor unit 304. The processes of the different embodiments may be performed by processor unit 304 using computer implemented instructions, which may be located in a memory, such as memory 306. These instructions are referred to as program code, computer usable program code, or computer readable program code that may be read and executed by a processor in processor unit 304. The program code in the different embodiments may be embodied on different physical or tangible computer readable media, such as memory 306 or persistent storage 308.

Program code 316 is located in a functional form on the computer readable media 318 that is selectively removable and may be loaded onto or transferred to data processing system 300 for execution by processor unit 304. Program code 316 and computer readable media 318 form a computer program product 320 in these example. In one example, the computer readable media 318 may be in a tangible form, such as, for example, an optical or magnetic disc that is inserted or placed into a drive or other device that is part of persistent storage 308 for transfer onto a storage device, such as a hard drive that is part of persistent storage 308. In a tangible form, the computer readable media 318 also may take the form of a persistent storage, such as a hard drive, a thumb drive, or a flash memory that is connected to data processing system 300. The tangible form of computer readable media 318 is also referred to as computer recordable storage media. In some instances, computer readable media 318 may not be removable. Alternatively, the program code 316 may be transferred to data processing system 300 from computer readable media 318 through a communications link to communications unit 310 and/or through a connection to input/output unit 312. The communications link and/or the connection may be physical or wireless in the illustrative examples. The computer readable media also may take the form of non-tangible media, such as communications links or wireless transmissions containing the program code.

The different components illustrated for data processing system 300 are not meant to provide architectural limitations to the manner in which different embodiments may be implemented. The different illustrative embodiments may be implemented in a data processing system including components in addition to or in place of those illustrated for data processing system 300. Other components shown in FIG. 3 can be varied from the illustrative examples shown. For example, a storage device in data processing system 300 is any hardware apparatus that may store data. Memory 306, persistent storage 308, and computer readable media 318 are examples of storage devices in a tangible form.

Accordingly, the disclosed embodiments present an apparatus, method and computer program product for information retrieval in semantic network. The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof . The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

In addition, the flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the revere order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A method for predicting the behaviour of entities, comprising:
identifying (202) a plurality of parameters for the behaviour of a plurality of entities;
narrowing (204) the plurality of entities to a plurality of entities of interest based on a scenario;
predicting (206) the behaviour of the entities of interest within the elected scenario; and
calibrating (208) the predicted behaviour of entities to an observed behaviour for the entities of interest.

2. The methods for predicting the behaviour of entities of claim 1, wherein said plurality of parameters comprises at least one of a size of a person and luggage, a person's weight, a person's velocity, a person's age, a person's fitness level, and a type of luggage.

3. The method for predicting the behaviour of entities of claim 1, wherein said plurality of entities comprises at least one of persons with luggage, persons with children, person with pets, cars, trucks, airport luggage trailers, and rescuers with rescue equipment.

4. The method for predicting the behaviour of entities of claim 1, wherein the identification is carried out via at least one of observation, visualisation, download of statistical data, video analytic and based on data provided by audio, infrared camera and intelligent floor plates sensors.

5. The method for predicting the behaviour of entities of claim 1, wherein said scenario is indicative of temporal, spatial, or other constrains.

6. The method for predicting the behaviour of entities of claim 1, wherein said scenario is at least one of a holiday, a working day afternoon, any an emergency situation.

7. The method for predicting the behaviour of entities of claim 6, wherein said scenario is **characterised by** a normal density function, a crowded density function and by an emergency situations.

8. The method for predicting the behaviour of entities of claim 1, wherein said scenario is at least one of an airport, a train station, an underground station or bus stops.

9. The method for predicting the behaviour of entities of claim 1, wherein said behaviour is indicative of at least one of walking direction, congregation of crowds, velocity of movement is a free area, velocity of movement in a crowded area, the geometrical size or the form of the area of movement.

10. The method for predicting the behaviour of entities of claim 1, wherein said prediction is a short term validity prediction.

11. The method for predicting the behaviour of entities of claim 1, wherein said prediction relies on a combination of statistical data.

12. The method for predicting the behaviour of entities of claim1, wherein said prediction comprises an extrapolation of data based on past behaviour.

13. The method for predicting the behaviour of entities of claim 11, wherein said extrapolation takes into account that the entities of interest behave in the future in the same manner as in the past in combination with a geometrical topology and its environment.

14. The method for predicting the behaviour of entities of claim 1, wherein calibration takes intro account at least one of basic environmental conditions, structural constraints imposed by the architecture of a surrounding building, and also a plurality of socio-cultural aspects.

15. A system for predicting the behaviour of entities, comprising:
at least a data bus system,
a memory coupled to the data bus system,
wherein the memory includes computer usable program code, a processing unit coupled to the data bus system,
wherein the processing unit executes the computer usable program code to
identify a plurality of parameters for the behaviour of a plurality of entities,
narrow the plurality of entities to a plurality of entities of interest based on a scenario,
predict the behaviour of the entities of interest within the elected scenario, and
calibrate the predicted behaviour of entities to an observed behaviour for the entities of interest.

16. A computer program product for predicting the behaviour of entities, comprising:
a tangible computer usable medium including computer usable program code for performing prediction of behaviour of entities, the computer usable program code being used for identifying a plurality of parameters for the behaviour of a plurality of entities,
narrowing the plurality of entities to a plurality of entities of interest based on a scenario,
predicting the behaviour of the entities of interest within the elected scenario, and
calibrating the predicted behaviour of entities to an observed behaviour for the entities of interest.
